# EUROPEAN PATENT APPLICATION

(11) **EP 4 335 574 A1**
(43) Date of publication of application: **13.03.2024**
(21) Application number: 23196325.7
(22) Date of filing: 08.09.2023
(51) Int. Cl.: B22F 10/25, B22F 10/64, B23K 1/00, B23K 26/144, B23K 26/342, B23K 35/02, B23P 6/00, B23P 6/04, B33Y 10/00, B33Y 40/10, B33Y 40/20, F01D 5/00

(54) **ADAPTIVELY DEPOSITING BRAZE MATERIAL USING STRUCTURED LIGHT SCAN DATA**

(30) Priority: 09.09.2022 US 202217942062
(71) Applicant: PRATT & WHITNEY CANADA CORP., Longueuil, Québec J4G 1A1 (CA)
(72) Inventor: DAULTON, Charles Trent, (01BE5) Longueuil, J4G 1A1 (CA); TRACY, Kevin M., (01BE5) Longueuil, J4G 1A1 (CA)
(74) Representative: Dehns

(57) **Abstract**

A method is disclosed for providing a component (22). During this method, a substrate (44) is scanned using structured light to provide substrate scan data. The substrate scan data is compared to substrate reference data to provide additive manufacturing data. Braze powder (42) is deposited with the substrate (44) based on the additive manufacturing data. The braze powder (42) is sintered together during the depositing of the braze powder (42) to provide the substrate (44) with sintered braze material (64). The sintered braze material (64) is heated to melt the sintered braze material (64) and to diffusion bond the sintered braze material (64) to the substrate (44).

## Description

### TECHNICAL FIELD

This disclosure relates generally to manufacturing a component using additive manufacturing.

### BACKGROUND INFORMATION

Defects in a component may be overhauled using braze filler material or weld filler. Various processes are known in the art for applying braze filler material and for welding filler material to a component. While these known processes have various advantages, there is still room in the art for improvement. In particular, there is a need in the art for overhaul processes which can reduce material waste and/or decrease formation of secondary (process related) defects in a substrate of the component.

### SUMMARY

According to an aspect of the present disclosure, a method is disclosed for providing a component. During this method, a substrate is scanned using structured light to provide substrate scan data. The substrate scan data is compared to substrate reference data to provide additive manufacturing data. Braze powder is deposited with the substrate based on the additive manufacturing data. The braze powder is sintered together during the depositing of the braze powder to provide the substrate with sintered braze material. The sintered braze material is heated to melt the sintered braze material and to diffusion bond the sintered braze material to the substrate.

According to another aspect of the present disclosure, another method is disclosed for providing a component. During this method, a substrate is scanned using structured light to provide substrate scan data. The substrate scan data is compared to substrate reference data to provide additive manufacturing data. A braze slurry is deposited into a void in the substrate. The braze slurry includes first braze powder within a liquid binder. The braze slurry is heated within the void to melt the first braze powder and subsequently provide a mass of the first braze powder within the void. Second braze powder is deposited on the substrate based on the additive manufacturing data. The second braze powder is sintered during the depositing of the second braze powder to provide the substrate with sintered braze material. The sintered braze material and the mass of the first braze powder are heated to diffusion bond the mass of the first braze material and the sintered braze material to the substrate.

According to still another aspect of the present disclosure, a system is disclosed for overhauling a component that includes a substrate. The system includes a scanning device, a controller, an additive manufacturing device and a furnace. The scanning device is configured to scan the substrate using structured light to provide substrate scan data indicative of one or more characteristics of the substrate. The controller is configured to compare the substrate scan data to substrate reference data to provide additive manufacturing data. The additive manufacturing device is configured to deposit braze powder with the substrate based on the additive manufacturing data. The braze powder is sintered together using a laser beam during the depositing of the braze powder to provide the substrate with sintered braze material. The furnace is configured to receive the substrate and melt the sintered braze material to facilitate diffusion bonding of the sintered braze material to the substrate.

The following optional features may be applied to any of the above aspects:
The sintered braze material may form a cladding over the mass of the first braze material and the substrate.

The scanning of the substrate may include projecting a pattern of white light or blue light onto the substrate.

The structured light may be structured white light.

The structured light may be structured blue light.

The substrate reference data may be or otherwise include data from a design specification for the component.

The braze powder may be deposited with the substrate to form a cladding on the substrate.

The depositing of the braze powder may include: directing the braze powder towards the substrate through a nozzle; and sintering the braze powder using a laser beam.

The laser beam may be directed towards the substrate through an inner bore of the nozzle.

The braze powder may include metal alloy powder and braze material powder with a lower melting point than the metal alloy powder.

The metal alloy powder and the substrate may be configured from or otherwise include a common metal alloy.

The heating of the sintered braze material may be performed in a vacuum furnace subsequent to the depositing of the braze powder.

The method may also include: depositing a braze slurry into a void in the substrate, the braze slurry configured from or otherwise including second braze powder within a liquid binder; and heating the braze slurry within the void to melt the second braze powder and subsequently provide a mass of the second braze powder within the void. The heating of the sintered braze material may also heat the mass of the second braze powder and diffusion bond the mass of the second braze powder to the substrate.

The braze slurry may be manually deposited into the void.

The second braze powder may include metal alloy powder and braze material powder with a lower melting point than the metal alloy powder.

The heating of the braze slurry may melt the second braze powder without diffusion bonding the mass of the second braze powder to the substrate.

A cladding of the sintered braze material may cover the mass of the second braze powder.

A damaged component may include the substrate. The braze powder may be deposited with the substrate to repair the damaged component.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for adaptively manufacturing a component.
FIG. 2 is a schematic illustration of an additive manufacturing device.
FIG. 3 is a flow diagram of an adaptive method for manufacturing the component.
FIGS. 4-9 are partial sectional illustrations of the component during various steps of the adaptive manufacturing method.

### DETAILED DESCRIPTION

The present disclosure includes systems and methods for adaptively manufacturing or otherwise providing a component. Herein, the term "manufacturing" may describe a process for forming the component; e.g., creating a brand new component. The term "manufacturing" may also or alternatively describe a process for overhauling (e.g., repairing) the component; e.g., restoring one or more features of a previously formed component to brand new condition, similar to brand new condition or better than brand new condition. The component, for example, may be overhauled to fix one or more defects (e.g., cracks, wear and/or other damage) imparted during previous use of the component. The component may also or alternatively be overhauled to fix one or more defects imparted during the initial formation of the component. For ease of description, however, the manufacturing systems and methods may be described below with respect to overhauling the component.

The component may be any stationary component within a hot section of the gas turbine engine; e.g., a combustor section, a turbine section or an exhaust section. Examples of the stationary component include, but are not limited to, a vane, a platform, a gas path wall, a liner and a shroud. The present disclosure, however, is not limited to stationary component applications. The engine component, for example, may alternatively be a rotor blade; e.g., a turbine blade. The present disclosure is also not limited to hot section engine components. For ease of description, however, the manufacturing systems and methods may be described below with respect to overhauling a gas turbine engine component such as a turbine vane or other stators within the turbine section.

The component may be included in various gas turbine engines. The component, for example, may be included in a geared gas turbine engine where a gear train connects one or more shafts to one or more rotors in a fan section, a compressor section and/or any other engine section. Alternatively, the component may be included in a direct-drive gas turbine engine configured without a gear train. The component may be included in a gas turbine engine configured with a single spool, with two spools, or with more than two spools. The gas turbine engine may be configured as a turbofan engine, a turbojet engine, a turboprop engine, a turboshaft engine, a propfan engine, a pusher fan engine or any other type of gas turbine engine. The gas turbine engine may alternatively be configured as an auxiliary power unit (APU) or an industrial gas turbine engine. The present disclosure therefore is not limited to any particular types or configurations of gas turbine engines. Furthermore, it is contemplated the manufacturing systems and methods of the present disclosure may alternatively be used to manufacture component(s) for non-gas turbine engine applications; e.g., for reciprocating piston internal combustion engine applications, for rotary internal combustion engine applications, etc.

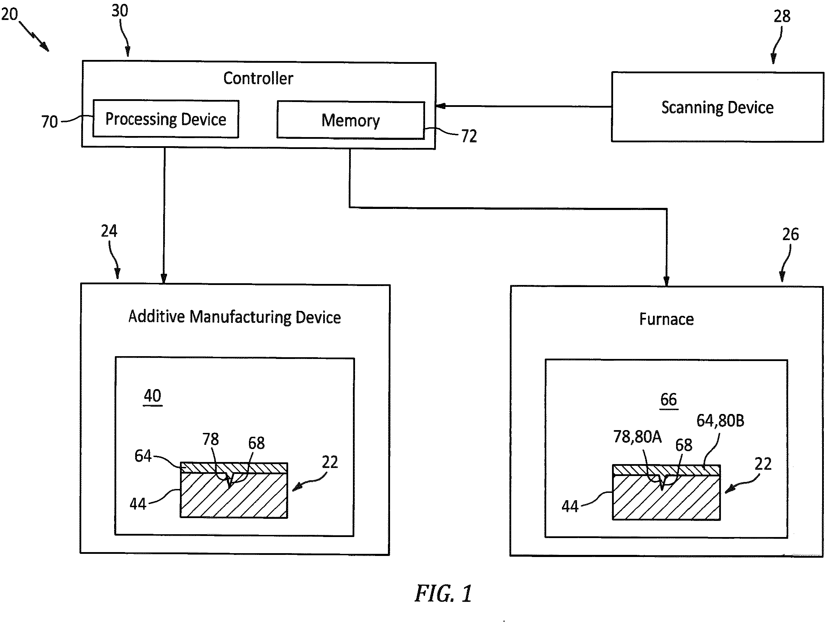

FIG. 1 schematically illustrates an exemplary system 20 for manufacturing (e.g., overhauling or forming) the component 22. This manufacturing system 20 includes an automated additive manufacturing (AM) device 24 (e.g., a three-dimensional (3D) printer), a furnace 26 and a scanning device 28. The manufacturing system 20 of FIG. 1 also includes a controller 30 in signal communication (e.g., hardwired and/or wirelessly coupled) with one or more or all of the other manufacturing system components 24, 26 and 28.

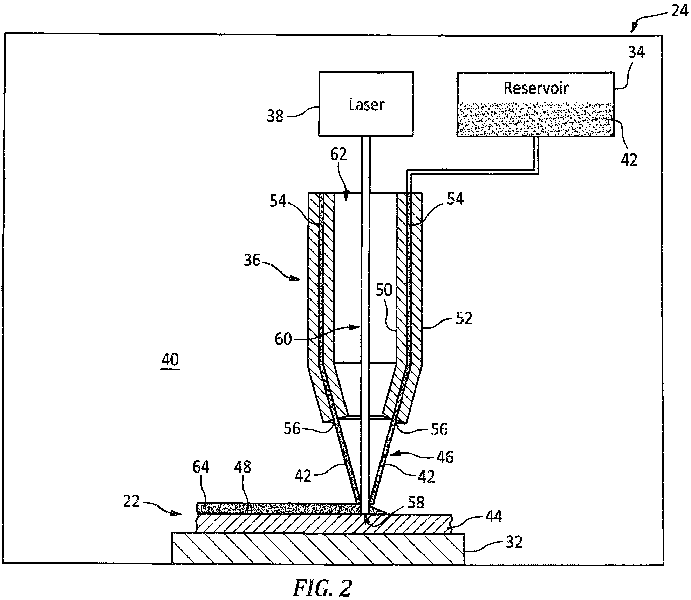

Referring to FIG. 2, the additive manufacturing device 24 may be configured as a laser material deposition device. More particularly, the additive manufacturing device 24 may be configured as a direct laser braze cladding (DLBC) device. The additive manufacturing device 24 of FIG. 2, for example, includes a component support 32, a material reservoir 34, a nozzle 36 and a laser 38.

The component support 32 is located within an internal build chamber 40 of the additive manufacturing device 24. This component support 32 is configured to support the component 22 within the build chamber 40. The component 22, for example, may be placed on top of the component support 32. The component 22 may also or alternatively be mounted to the component support 32 via a fixture, which fixture may arrange the component 22 in a fixed position and/or in a known spatial orientation within the build chamber 40.

The material reservoir 34 is configured to store a quantity of cladding braze powder 42 formed from cladding braze powder. This material reservoir 34 is also configured to supply the cladding braze powder 42 to the nozzle 36 during additive manufacturing device operation. Examples of the material reservoir 34 include, but are not limited to, a tank, a hopper and a bin.

The nozzle 36 is configured to deliver the cladding braze powder 42 received from the material reservoir 34 to a substrate 44 of the component 22 during additive manufacturing device operation. More particularly, the nozzle 36 is configured to direct a (e.g., annular, conical) stream 46 of the cladding braze powder 42 toward (e.g., to) a surface 48 of the substrate 44. The nozzle 36 of FIG. 2, for example, includes a tubular inner sidewall 50 and a tubular outer sidewall 52. The outer sidewall 52 extends axially along and circumscribes the inner sidewall 50 so as to form a passage 54 (e.g., an annulus) between the inner sidewall 50 and the outer sidewall 52. This passage 54 is fluidly coupled with an outlet from the material reservoir 34, and the passage 54 extends axially within the nozzle 36 to a (e.g., annular) nozzle orifice 56. A distal end portion of the nozzle 36 and its inner sidewall 50 and its outer sidewall 52 may radially taper inwards as the nozzle 36 extends axially toward (e.g., to) the nozzle orifice 56. With such an arrangement, the nozzle 36 may focus the cladding braze powder 42 to, around or about a target point 58 on, slightly above or slightly below the substrate surface 48. However, in alternative embodiments, the nozzle 36 may be configured to deliver the cladding braze powder 42 through an internal bore rather than an annulus.

The laser 38 is configured to generate a laser beam 60 for sintering the cladding braze powder 42 delivered by the nozzle 36 together and to the substrate 44. Herein, the term "sintering" may describe a process for coalescing powder particles together into a (e.g., porous) mass by heating without (e.g., partial or complete) liquification of the powder. This is in contrast to, for example, a powder laser welding process where powder is melted to a liquid state (e.g., in a melt pool) by a laser beam and then solidified as a solid mass. The laser 38 of FIG. 2 is configured to direct the laser beam 60 to or about the target point 58, where the laser beam 60 may be incident with and is operable to heat up the cladding braze powder 42 for sintering. The laser beam 60 of FIG. 2 is directed through an (e.g., central) internal bore 62 of the nozzle 36, which internal nozzle bore 62 may be formed by the inner sidewall 50. However, in other embodiments, the laser 38 may be configured to direct the laser beam 60 outside of the nozzle 36 or along another path through the nozzle 36.

Referring to FIG. 1, the furnace 26 is configured to receive the substrate 44 with the sintered cladding braze powder 64 within an internal treatment chamber 66 of the furnace 26. The furnace 26 is further configured to subject the substrate 44 and the sintered cladding braze powder 64 to a heat cycle, for example under vacuum and/or in a partial pressure inert gas (e.g., argon (Ar) gas) environment. During this heat cycle, the sintered cladding braze powder 64 may melt and diffusion bond to the substrate 44. An example of the furnace 26 is a vacuum furnace.

The scanning device 28 of FIG. 1 is configured to map a surface geometry of, one or more dimensions of and/or one or more spatial coordinates for a portion (or multiple portions) of or an entirety of an exterior of the component 22. Briefly, the term "map" may describe a process of determining (e.g., measuring) and collecting certain information. The scanning device 28 may also be configured to map a geometry of, one or more dimensions of and/or one or more spatial coordinates for a feature (or multiple features) projecting into the component 22; e.g., an opening to a void 68 such as, but not limited to, a crack, a fracture, a slice, a gouge, a dimple, etc. The scanning device 28 of FIG. 1, in particular, is configured as a structured light scanning device; e.g., a structured white light scanning device or a structured blue light scanning device. This scanning device 28 is configured to project a pattern of light (e.g., structured white light, structured blue light) onto the component 22 using one or more light projectors, which pattern of light may be formed by white light (e.g., with a wavelength between 400-700nm) or blue light (e.g., with a wavelength between 450-495nm); however, the present disclosure is not limited to the foregoing exemplary wavelengths. The scanning device 28 is configured to pick up (e.g., image, capture, detect, etc.) distortions in the pattern of light against the exterior of the component 22 using one or more imaging devices; e.g., cameras. The scanning device 28 is further configured to map the component 22 based on the distortions in the pattern of light.

The controller 30 may be implemented with a combination of hardware and software. The hardware may include at least one processing device 70 and a memory 72, which processing device 70 may include one or more single-core and/or multi-core processors. The hardware may also or alternatively include analog and/or digital circuitry other than that described above.

The memory 72 is configured to store software (e.g., program instructions) for execution by the processing device 70, which software execution may control and/or facilitate performance of one or more operations such as those described below. The memory 72 may be a non-transitory computer readable medium. For example, the memory 72 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

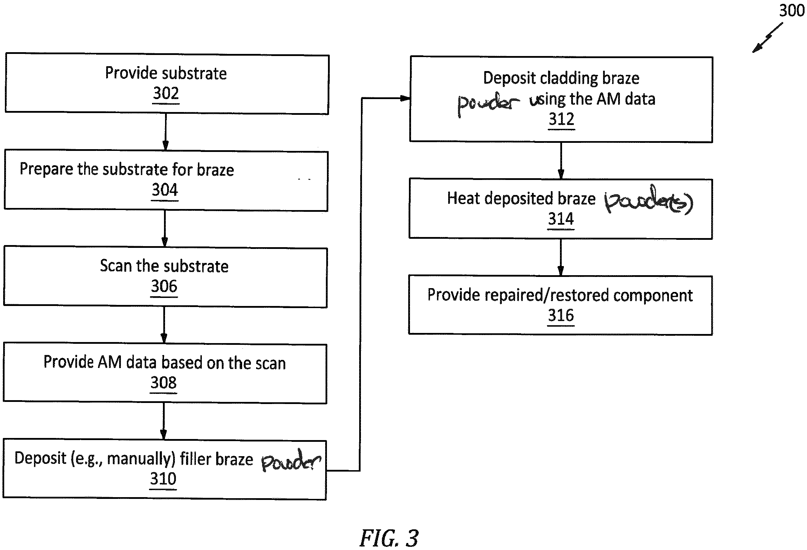

FIG. 3 is a flow diagram of an exemplary adaptive method 300 for manufacturing (e.g., overhauling or forming) the component 22. For ease of description, the manufacturing method 300 is described with respect to the manufacturing system 20 and overhauling the component 22. The manufacturing method 300, however, is not limited to any particular manufacturing system types or configurations. Furthermore, some or all of the method steps may alternatively be performed to form a new component.

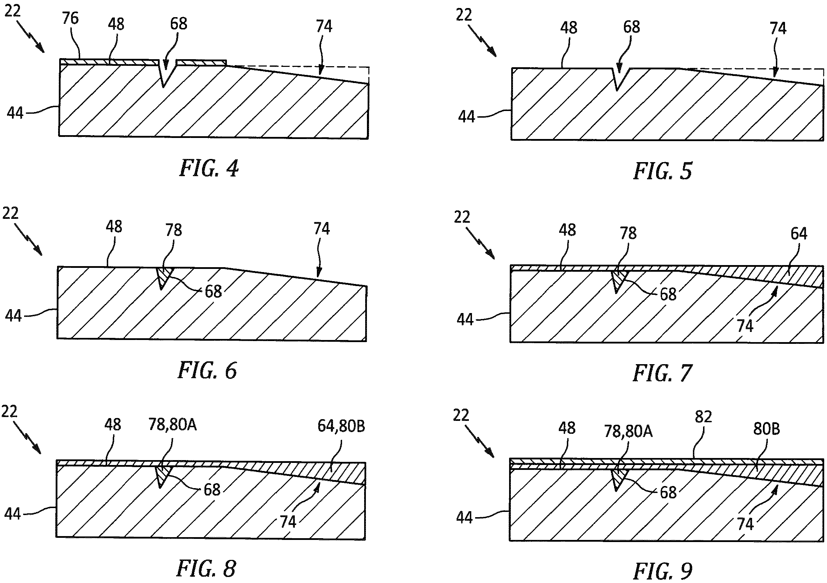

In step 302, referring to FIG. 4, the substrate 44 is provided. For ease of description, this substrate 44 is described as part of a damaged component; e.g., a worn and/or cracked component previously installed within an engine. For example, the component 22 of FIG. 4 includes at least one void 68. This void 68 projects partially into the component 22 and its substrate 44 from the exterior of the component 22. The component 22 of FIG. 4 also includes a wear region 74 where a portion of the component 22 and its substrate 44 has been worn away due to, for example, erosion, rubbing and/or otherwise. Of course, in other embodiments, the component 22 may include multiple voids 68, multiple wear regions 74, the void(s) 68 without any wear region, the wear region(s) 74 without any void, and/or one or more other substrate defects.

In step 304, referring to FIG. 5, the substrate 44 is prepared for braze powder(s). A coating 76 (see FIG. 4) over at least a portion or an entirety of the substrate 44, for example, may be removed to expose the underlying substrate 44 and its substrate surface 48. The coating 76 may be removed using various techniques such as, but not limited to, chemical stripping, abrasive blasting, waterjet blasting and/or machining. In addition or alternatively, the void 68 may be machined (e.g., enlarged, smoothed, etc.), cleaned out and/or otherwise processed.

In step 306, the substrate 44 is scanned using structured light; e.g., structured white or blue light. The scanning device 28 of FIG. 1, for example, scans the substrate 44 of FIG. 5 to map one or more exterior characteristics of the substrate 44 and/or one or more interior characteristic of the substrate 44. Examples of the exterior substrate characteristics include, but are not limited to, a surface geometry of, one or more dimensions of and/or one or more spatial coordinates for a portion (or multiple portions) of or an entirety of an exterior of the substrate 44. Examples of the interior substrate characteristics include, but are not limited to, a geometry of, one or more dimensions of and/or one or more spatial coordinates for a feature (or multiple features) projecting into the substrate 44; e.g., the opening to the void 68. The scanning device 28 then provides substrate scan data to the controller 30 indicative of the one or more mapped substrate characteristics. The scan data may be in the form of a computer aided design (CAD) model file; e.g., a stereolithography (STL) model file.

In step 308, the substrate scan data is processed to provide additive manufacturing (AM) data. The controller 30 of FIG. 1, for example, may compare (e.g., align) the one or more mapped substrate characteristics from the substrate scan data with respective characteristics from substrate reference data. This substrate reference data may be data input from (or derived from) a (e.g., original equipment manufacturer (OEM)) design specification for the component 22. In other words, the controller 30 may compare the one or more mapped characteristics for the substrate 44 being worked on (e.g., overhauled) to one or more corresponding characteristics of a (e.g., theoretical) design space component; e.g., a component formed according to the design specification. The controller 30, for example, may generate a solid model of the scanned substrate 44 to compare to a solid model of the design space component. The controller 30 may thereby evaluate the current state / condition of the substrate 44, and determine what additive operations may be performed (e.g., determine amount(s) of the cladding braze powder to deposit, determine where to deposit the cladding braze powder, determine path(s) to follow for the depositing of the cladding braze powder, etc.) to place the substrate 44 of FIG. 5 into like new (or new) condition; e.g., to have the same (or similar) characteristics as the design space component. For example, the controller 30 may identify material deficits between the solid model of the scanned substrate 44 and the solid model of the design space component, and determine how to fill those material deficits with the cladding braze powder. The additive manufacturing data may include one or more commands for the additive manufacturing device 24 to place the substrate 44 of FIG. 5 into the like new (or new) condition.

In step 310, referring to FIG. 6, filler braze powder 78 may be deposited with the substrate 44. For example, filler braze powder formed from the filler braze powder 78 may be included with a liquid binder in a braze slurry. This braze slurry may be (e.g., manually or otherwise) directed (e.g., injected) into the void 68 in the substrate 44 to partially or completely fill the void 68. The braze slurry may then be heated (e.g., within the furnace 26 or via another device) to melt the filler braze powder 78 to subsequently provide a (e.g., solidified) mass of the filler braze powder 78 within the void 68. During the heating of the braze slurry, the temperature and duration of the heating may be selected such that the filler braze powder 78 melt without (e.g., substantially or at all) diffusion bonding to material of the substrate 44. In other words, the filler braze powder 78 may be melted just enough, for example, to coalesce (e.g., sinter) together and/or to the substrate 44 to form the (e.g., sintered) mass of the filler braze powder 78 within the void 68.

The filler braze powder may include a mixture of metal alloy powder (e.g., substrate powder) and braze material powder. The metal alloy powder may be selected to have a relatively high melting point and common (the same) or similar material properties as the substrate 44. The metal alloy powder, for example, may be made from a common (or a similar) material as the underlying substrate 44; e.g., an aluminum (Al) superalloy, a nickel (Ni) superalloy, a titanium (Ti) superalloy, etc. The braze material powder, on the other hand, may be selected to have a relatively low melting point, which is lower than the melting point of the metal alloy powder. The braze material powder, for example, may include a common or similar base element as the substrate 44 and/or the metal alloy powder (e.g., aluminum (Al), nickel (Ni) or titanium (Ti)) without the super alloying elements. The brazing powder may also include boron (B), silicon (Si) and/or other melting point suppressants which may help facilitate melting and diffusion of the metal alloy powder with the substrate 44. The present disclosure, however, is not limited to the foregoing exemplary braze materials.

In step 312, referring to FIGS. 2 and 7, the cladding braze powder is deposited with the substrate 44 using the additive manufacturing device 24. The cladding braze powder is deposited based on / according to the additive manufacturing data; e.g., command(s) provided by the controller 30. The cladding braze powder 42 may be deposited with the substrate 44 to repair, for example, the wear region 74. The cladding braze powder 42 and its cladding braze powder may therefore be provided (e.g., selected, formulated, etc.) for improved dimensional repair of the surface due to lower wettability. The cladding braze powder 42, for example, may include a mixture of the metal alloy powder (e.g., substrate powder) and the braze material powder.

During the cladding braze powder deposition, the additive manufacturing device 24 of FIG. 2 may deposit the cladding braze powder 42 onto the substrate 44 at or about the target point 58. The laser 38 may concurrently sinter this cladding braze powder 42 at the target point 58 together and/or to the underlying substrate 44. The additive manufacturing device 24 may be positioned and operated to provide a cladding (e.g., a layer or multiple layers) of the sintered cladding braze powder 64 over the wear region 74; e.g., to build back worn away substrate material. The additive manufacturing device 24 may also or alternatively be positioned and operated to provide a cladding (e.g., a layer or multiple layers) of the sintered cladding braze powder 64 over the filler braze powder 78 and/or one or more other (e.g., adjacent) regions of the substrate 44.

The additive manufacturing device 24 may selectively deposit the cladding braze powder over the substrate 44 such that (e.g., only) areas which need repair (and optionally areas adjacent and/or surrounding those areas) are coated with the sintered cladding braze powder 64. Of course, in other embodiments, the cladding braze powder may be deposited over an entirety of the substrate 44 where excess material may later be removed. The cladding braze powder may be deposited (e.g., built up) as one or more layers during the step 312.

In step 314, referring to FIG. 8, the substrate 44, the filler braze powder 78 and/or the cladding braze powder are heated. The substrate 44 with the sintered cladding braze powder 64 and/or the mass of filler braze powder 78, for example, may be arranged within the treatment chamber 66 of the furnace 26 of FIG. 1. The furnace 26 may subject the substrate 44 with the filler braze powder 78 and/or the cladding braze powder to a heat cycle. More particularly, the substrate 44 with the filler braze powder 78 and/or the cladding braze powder may be heated to an elevated temperature within a partial pressure inert gas environment. The elevated temperature is selected such that the filler braze powder 78 and/or the cladding braze powder melt and flows into defects of the substrate 44 by capillary action. Once the sintered braze material has melted, a relatively lower temperature may be selected and held in the same heat cycle for a duration. This sustained temperature may facilitate diffusion of the melting point suppressant material. This diffusion of the melting point suppressant material may facilitate athermal solidification, resulting in a braze diffusion bond of the sintered material to the substrate 44. The athermal solidification may describe solidification of the melted sintered braze material under, for example, a constant temperature. The diffusion duration may be between four (4) hours and twelve (12) hours, but may be much shorter or longer depending on materials being diffusion brazed and/or desired material properties and diffusion bond to the substrate 44 to form solid addition(s) to the substrate 44. This elevated temperature, however, is less than a melting point temperature of the substrate material. The elevated temperature for the braze melt, for example, may be between 1,500°F (816°C) and 2,500°F (1371°C). The elevated temperature for the braze diffusion, for example, may be between 1,000°F (538°C) and 2,400°F (1316°C). The inert gas environment may have a vacuum pressure range between, for example, 0.5 microns and 0.1 microns. The present disclosure, however, is not limited to the foregoing exemplary heat cycle parameters, and the foregoing heat cycle parameters may vary depending upon the specific material composition of the substrate 44 and the braze materials, dimensions (e.g., thickness) of the sintered braze material(s), etc.

Following the heating step 314, first braze filler material 80A (e.g., melted and diffusion bonded filler braze material) of FIG. 8 may heal the void 68. The first braze filler material 80A, for example, may partially or completely fill the void 68. Second braze filler material 80B (e.g., melted and diffusion bonded cladding braze material) may provide a cladding over the substrate 44 to restore a dimensional parameter of and/or reinforce the wear region 74 and/or other regions. The second braze filler material 80B, for example, may buildup the wear region 74 back to or above a dimensional parameter specified therefor by a design specification or an overhaul specification for the component 22.

In step 316, referring to FIG. 9, the substrate 44 with the braze filler material(s) 80A and/or 80B (generally referred to as "80") may be processed (e.g., post-braze processed) to provide an overhauled / restored component. Excess braze filler material(s), for example, may be removed, the substrate material and/or the braze filler material(s) may be finished (e.g., sanded, polished, etc.), and/or one or more coatings 82 (e.g., bond coating(s), environmental coating(s), thermal barrier coating(s), etc.) may be applied to the substrate 44 and/or the braze filler material(s) 80.

In some embodiments, referring to FIG. 2, the cladding braze powder 42 and the laser beam 60 may be concurrently directed to the common target point 58 for the cladding braze powder deposition. In other embodiments, however, the laser beam 60 may alternatively be directed to a different target point than the cladding braze powder 42. The laser beam target point, for example, may alternatively be spaced from and follow the cladding braze powder target point.

In some embodiments, the cladding braze powder 42 may be sintered using the laser beam 60. The present disclosure, however, is not limited to use of such an exemplary energy beam. The cladding braze powder 42, for example, may alternatively be sintered using an electron beam provided by an electron beam source. Furthermore, multiple energy beams (e.g., laser beams and/or electron beams) may be used for sintering the cladding braze powder 42. In addition or alternatively, multiple nozzles 36 may be used to deliver the cladding braze powder 42.

A component manufactured using a typical additive laser deposition welding process may be subject to: internal stresses thermally induced by relatively high welding temperatures (e.g., temperatures high enough to melt the substrate material); thermally induced distortion and/or warping; and/or reduction in material density caused by, for example, dendritic voids. By contrast, sintering the cladding braze powder 42 with the substrate 44 and then diffusion bonding the cladding braze powder with the substrate 44 as described above subjects the substrate 44 to relatively low processing temperatures, compared to welding temperatures. The manufacturing methods of the present disclosure may thereby reduce or eliminate: thermally induced stresses; thermally induced distortion and/or warping; and/or reduction in material density associated with additive laser deposition welding techniques. The above laser braze cladding technique is also paired with the adaptive processing to reduce material consumption and/or require less post processing (e.g., machining, finishing, etc.) compared to traditional manual brazing techniques.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method for providing a component (22), comprising:
scanning a substrate (44) using structured light to provide substrate scan data;
comparing the substrate scan data to substrate reference data to provide additive manufacturing data;
depositing braze powder (42) with the substrate (44) based on the additive manufacturing data, the braze powder (42) sintered together during the depositing of the braze powder (42) to provide the substrate (44) with sintered braze material (64); and
heating the sintered braze material (64) to melt the sintered braze material (64) and diffusion bond the sintered braze material (64) to the substrate (44).

2. The method of claim 1, wherein the structured light comprises structured white light or structured blue light.

3. The method of claim 1 or 2, wherein the substrate reference data comprises data from a design specification for the component (22).

4. The method of claim 1, 2 or 3, wherein the braze powder (42) is deposited with the substrate (44) to form a cladding on the substrate (44).

5. The method of any preceding claim, wherein the depositing of the braze powder (42) includes:
directing the braze powder (42) towards the substrate (44) through a nozzle (36); and
sintering the braze powder (42) using a laser beam (60),
wherein, optionally, the laser beam (60) is directed towards the substrate (44) through an inner bore (62) of the nozzle (36).

6. The method of any preceding claim, wherein the braze powder (42) comprises metal alloy powder and braze material powder with a lower melting point than the metal alloy powder, and, optionally, the metal alloy powder and the substrate (44) comprise a common metal alloy.

7. The method of any preceding claim, wherein the heating of the sintered braze material (64) is performed in a vacuum furnace (26) subsequent to the depositing of the braze powder (42).

8. The method of any preceding claim, further comprising:
depositing a braze slurry into a void (68) in the substrate (44), the braze slurry comprising second braze powder (78) within a liquid binder; and
heating the braze slurry within the void (68) to melt the second braze powder (78) and subsequently provide a mass of the second braze powder (78) within the void (68);
wherein the heating of the sintered braze material (64) further heats the mass of the second braze powder (78) and diffusion bonds the mass of the second braze powder (78) to the substrate (44).

9. The method of claim 8, wherein:
the braze slurry is manually deposited into the void (68); and/or
the second braze powder (78) comprises metal alloy powder and braze material powder with a lower melting point than the metal alloy powder.

10. The method of claim 8 or 9, wherein:
the heating of the braze slurry melts the second braze powder (78) without diffusion bonding the second braze powder (78) to the substrate (44); and/or
a cladding of the sintered braze material (64) covers the mass of the second braze powder (78).

11. The method of any preceding claim, wherein:
a damaged component comprises the substrate (44); and
the braze powder (42) is deposited with the substrate (44) to repair the damaged component.

12. A method for providing a component (22), comprising:
scanning a substrate (44) using structured light to provide substrate scan data;
comparing the substrate scan data to substrate reference data to provide additive manufacturing data;
depositing a braze slurry into a void (68) in the substrate (44), the braze slurry comprising first braze powder (78) within a liquid binder; and
heating the braze slurry within the void (68) to melt the first braze powder (78) and subsequently provide a mass of the first braze powder (78) within the void (68);
depositing second braze powder (42) on the substrate (44) based on the additive manufacturing data, the second braze powder (42) which is sintered during the depositing of the second braze powder (42) to provide the substrate (44) with sintered braze material (64); and
heating the sintered braze material (64) and the mass of the first braze powder (78) to diffusion bond the mass of first braze powder (78) and the sintered braze material (64) to the substrate (44).

13. The method of claim 12, wherein the sintered braze material (64) forms a cladding over the mass of the first braze powder (78) and the substrate (44).

14. The method of any preceding claim, wherein the scanning of the substrate (44) comprises projecting a pattern of white light or blue light onto the substrate (44).

15. A system (20) for overhauling a component (22) comprising a substrate (44), the system (20) comprising:
a scanning device (28) configured to scan the substrate (44) using structured light to provide substrate scan data indicative of one or more characteristics of the substrate (44);
a controller (30) configured to compare the substrate scan data to substrate reference data to provide additive manufacturing data;
an additive manufacturing device (24) configured to deposit braze powder (42) with the substrate (44) based on the additive manufacturing data, the braze powder (42) comprising braze powder (42) which is sintered together using a laser beam (60) during the depositing of the braze powder (42) to provide the substrate (44) with sintered braze material (64); and
a furnace (26) configured to receive the substrate (44) and melt the sintered braze material (64) to facilitate diffusion bonding of the sintered braze material (64) to the substrate (44).
